# FASCICULE DE BREVET EUROPEEN

(11) **EP 2 366 624 B1**
(45) Date de publication et mention de la délivrance du brevet: **24.08.2016**
(21) Numéro de dépôt: 11305289.8
(22) Date de dépôt: 16.03.2011
(51) Int. Cl.: B64D 15/04, B64D 33/02

(54) **Dispositif de dégivrage comprenant des moyens pour détecter une fuite au niveau d'une alimentation en air chaud**
Enteisungssystem mit Mitteln zum Erfassen einer Leckage in der Warmluftversorgung.
De-icing system comprising detection means for detecting an air leak in the hot air supply.

(30) Priorité: 18.03.2010 FR 1051943
(43) Date de publication de la demande: 21.09.2011
(73) Titulaire: Airbus Opérations SAS, 31060 Toulouse (FR)
(72) Inventeur: Porte, Alain, 31770, COLOMIERS (FR); Dewitte, Jérôme, 31200, TOULOUSE (FR); Cayrol, Emmanuel, PIBRAC, 31820 (FR)
(74) Mandataire: Fantin, Laurent

(56) Documents cités:
- EP-A1- 1 103 462
- EP-A1- 1 186 533
- FR-A1- 2 887 294
- GB-A- 2 461 385

## Description

La présente invention se rapporte à un dispositif de dégivrage comprenant des moyens pour détecter une fuite au niveau d'une alimentation en air chaud.

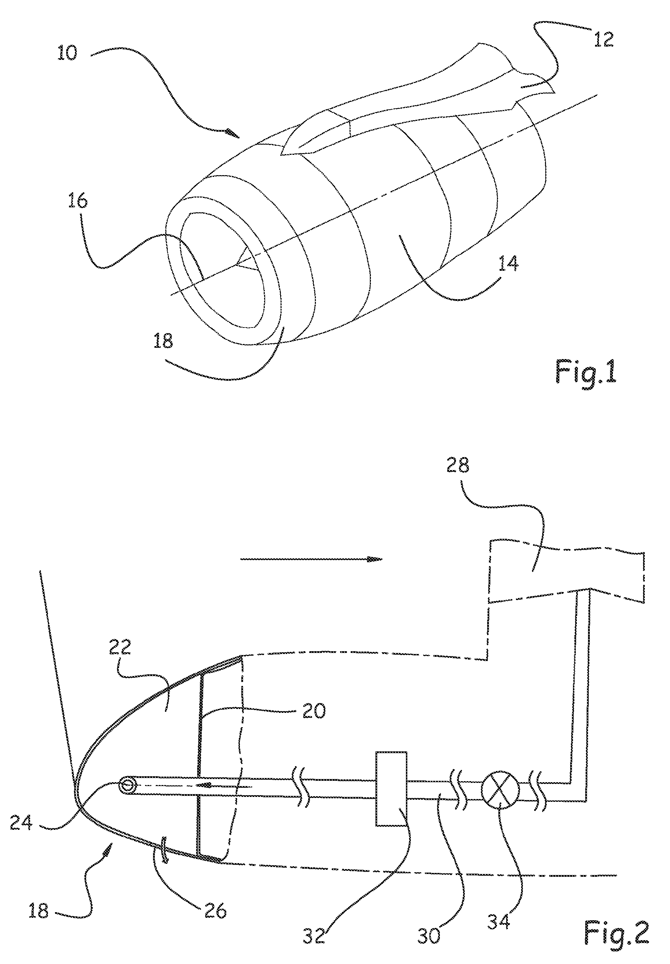

De manière connue, comme illustré sur la figure 1, un ensemble propulsif 10 d'un aéronef, par exemple relié sous la voilure par l'intermédiaire d'un mât 12, comprend une nacelle 14 dans laquelle est disposée de manière sensiblement concentrique une motorisation. L'axe longitudinal de la nacelle est référencé 16. La nacelle 14 comprend une paroi intérieure délimitant un conduit avec une entrée d'air 18 à l'avant permettant de canaliser l'air en direction de la motorisation.

La présente invention se rapporte plus particulièrement aux nacelles intégrant un procédé de protection contre le givre ou de la glace utilisant de l'air chaud en contact avec la paroi interne de l'entrée d'air 18, notamment de l'air chaud prélevé au niveau du moteur.

Selon un mode de réalisation connu d'après les documents FR-2.813.581 et US-6.443.395, illustré sur les figures 2 et 3, une nacelle 14 comprend à l'intérieur une cloison appelée cadre avant 20 qui délimite avec l'entrée d'air 18 un conduit annulaire 22 qui s'étend sur toute la circonférence de la nacelle et qui a une section en forme sensiblement de D.

Ce conduit 22 comprend une alimentation en air chaud avec au moins un orifice 24, l'air circulant dans ce conduit étant évacué via un échappement 26. L'air chaud est prélevé au niveau de la motorisation 28 et l'alimentation en air chaud comprend une conduite 30 pour l'acheminer jusqu'à l'orifice 24. Cette conduite 30 comprend des moyens 32 de mesure de la pression ainsi que des moyens 34 pour réguler la pression afin de délivrer au niveau de l'orifice 24 la quantité requise en air chaud.

L'orifice 24 présente une restriction de manière à obtenir sur le plan de l'écoulement des fluides un choc sonique à savoir une pression élevée en amont de l'orifice 24 et une pression faible en aval.

Dans certaines zones, par exemple au niveau de la motorisation, des moyens peuvent être prévus pour détecter la rupture complète ou quasi complète de la conduite 30 comme par exemple au moins un capteur de température.

Toutefois, compte tenu de l'environnement et notamment en raison de la ventilation de la zone moteur, un capteur de température ne peut détecter que les fuites importantes, comme par exemple lors de la rupture complète ou quasi complète de la conduite 30, susceptibles d'engendrer de fortes variations de température et ne peut pas détecter les petites fuites ne provoquant qu'une faible élévation de température.

Pour certaines zones comme le conduit 22, un capteur de température ne peut pas permettre de détecter une fuite ou la rupture complète ou quasi complète de la conduite 30, ces zones étant soumises à des températures toujours élevées en présence ou non d'une fuite ou d'une rupture complète ou quasi complète de la conduite 30.

Le document EP1103462 est considéré l'état de la technique le plus proche.

Par conséquent, il n'existe aucun moyen pour détecter une fuite limitée mais pourtant suffisante pour rendre la capacité de dégivrage insuffisante.

Aussi, la présente invention vise à pallier à ce problème en proposant un dispositif de dégivrage permettant de détecter une fuite au niveau de l'alimentation en air chaud et donc d'en contrôler le bon fonctionnement.

A cet effet, l'invention a pour objet un dispositif de dégivrage d'un bord d'attaque d'un aéronef, ledit dispositif comportant au moins un orifice d'éjection d'air chaud, une conduite pour acheminer l'air chaud depuis une motorisation jusqu'audit orifice d'éjection et des moyens de mesure de la pression à l'intérieur de ladite conduite, caractérisé en ce que ladite conduite comprend au moins une réduction de section appelée restriction en amont des moyens de mesure de la pression.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- la figure 2 est une coupe selon un plan longitudinal d'une partie d'une nacelle selon l'art antérieur, et
- la figure 3 est une coupe selon un plan longitudinal d'une partie d'une nacelle selon l'invention.

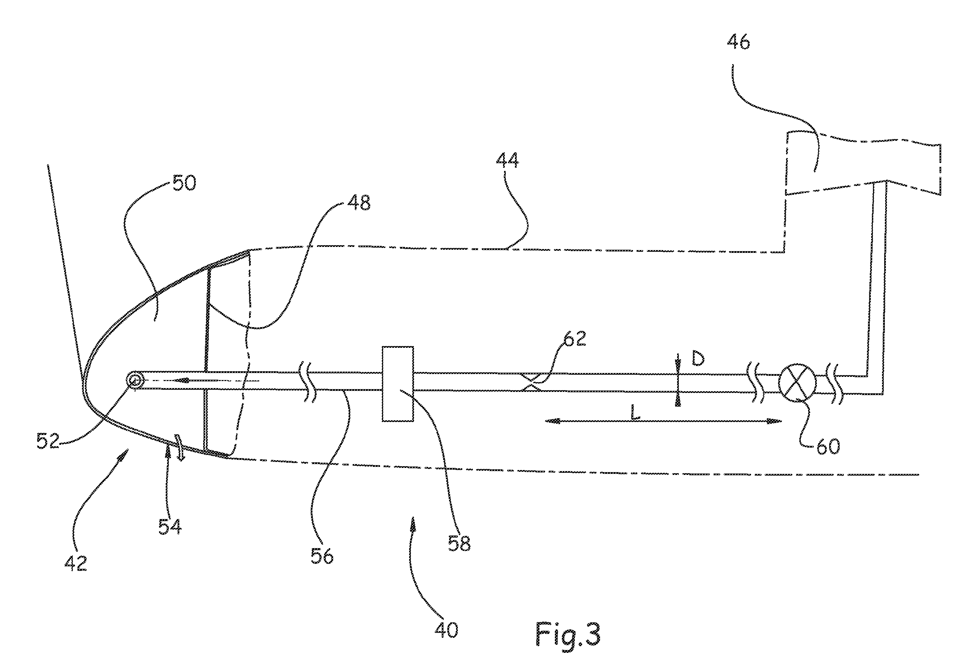

Sur la figure 3, on a représenté en 40 une partie d'une nacelle d'aéronef comprenant à l'avant une entrée d'air 42 prolongée à l'intérieur par un conduit 44 permettant de canaliser l'air en direction d'une motorisation 46 représentée de manière schématique. Cette nacelle 40 comprend un système pour empêcher ou limiter l'accumulation de givre ou de glace au niveau de la surface externe de l'entrée d'air 42 utilisant de l'air chaud en contact avec la surface interne de ladite entrée d'air, notamment de l'air chaud prélevé au niveau de la motorisation 46. A cet effet, la nacelle 42 comprend à l'intérieur une cloison appelée cadre avant 48 qui délimite avec l'entrée d'air 42 un conduit 50 annulaire qui s'étend sur toute la circonférence de la nacelle et qui a une section en forme sensiblement de D.

Ce conduit annulaire 50 comprend une alimentation en air chaud comprenant au moins un orifice 52 permettant d'injecter de l'air chaud en contact avec la surface intérieure de la paroi à traiter. La nacelle comprend également des moyens 54 d'échappement de l'air chaud à l'extérieur du conduit annulaire 50. Bien que décrite appliquée à une entrée d'air, l'invention peut être appliquée à tous les systèmes de traitement du givre ou de la glace au niveau d'un bord d'attaque d'un aéronef utilisant de l'air chaud.

L'air chaud est prélevé au niveau de la motorisation 46 et l'alimentation en air chaud comprend une conduite 56 pour l'acheminer jusqu'à l'orifice 52. De manière connue, cette conduite 56 comprend des moyens 58 de mesure de la pression ainsi qu'en amont des moyens 60 pour réguler la pression afin de délivrer au niveau de l'orifice la quantité requise en air chaud.

Les moyens 58 de mesure de la pression et les moyens 60 pour réguler la pression font partie de la motorisation 46 et sont fournis par le motoriste. Ainsi, les moyens 60 pour réguler la pression sont contrôlés par le calculateur de bord de l'aéronef en fonction des commandes transmises au calculateur par le pilote et/ou des signaux ou informations transmis au calculateur par les moyens 58 de mesure de la pression.

Le ou les orifices 52 ont une section d'éjection totale S correspondant à la somme des sections des orifices 52.

De préférence, les orifices 52 sont disposés chacun à l'extrémité d'un conduit dont les formes et les dimensions sont déterminées de manière à obtenir un choc sonique au niveau du ou des orifices.

Selon l'invention, la conduite 56 comprend au moins une réduction de section appelée restriction 62 en amont des moyens 58 de mesure de la pression. De ce fait le choc sonique apparait au niveau de la restriction 62 et non plus au niveau du ou des orifices 52 si bien que la pression est élevée en amont de la restriction et faible en aval.

Cette restriction 62 rend possible la détection d'une fuite par les moyens 58 de mesure de la pression en aval desdits moyens. En effet, l'apparition d'une fuite va engendrer une variation de la pression plus significative, et donc détectable par les moyens 58 de mesure, par rapport à une pression normale de fonctionnement qui est faible en raison de la présence de la restriction 62.

Cet agencement permet d'utiliser les moyens 58 de mesure existants et de ne pas ajouter d'autres moyens de mesure pour détecter une fuite. De plus les moyens 58 de mesure peuvent transmettre une information de fuite à un calculateur spécifique ou non apte à transmettre une alerte relative à un fonctionnement altéré du système de dégivrage.

De plus, cette restriction 62 est robuste et ne nécessite qu'une maintenance très limitée dans le temps.

La section de la restriction S' est supérieure à la section d'éjection S.

La section de la restriction S' est égale à la section d'éjection S à laquelle on ajoute une section correspondant aux pertes de charge présentes dans la conduite 56 entre la restriction 62 et le ou les orifices 52 et une marge.

Cette restriction 62 a des formes adaptées pour limiter les perturbations et les pertes de charge. Selon un mode de réalisation, la restriction 62 a une forme de convergent puis de divergent.

Selon une autre caractéristique de l'invention, la restriction 62 est disposée entre les moyens 60 de régulation et les moyens 58 de mesure.

De préférence, la restriction 62 est disposée a une distance L supérieure ou égale à 5×D par rapport aux moyens 60 de régulation, D étant le diamètre de la conduite 56 afin que la restriction 62 ne perturbe pas les moyens 60 de régulation.

Avantageusement, la restriction 62 est disposée la plus proche possible des moyens 58 de mesure afin que la valeur des pertes de charge entre la restriction 62 et le ou les orifices 52 soit la plus réduite possible afin d'améliorer la sensibilité du dispositif de détection d'une fuite.

## Revendications

1. Dispositif de dégivrage d'un bord d'attaque d'un aéronef, ledit dispositif comportant au moins un orifice (52) d'éjection d'air chaud, une conduite (56) pour acheminer l'air chaud depuis une motorisation jusqu'audit orifice (52) d'éjection et des moyens (58) de mesure de la pression à l'intérieur de ladite conduite (56), ladite conduite (56) comprenant au moins une réduction de section appelée restriction (62) en amont des moyens (58) de mesure de la pression, la restriction (62) ayant une section S' égale à la section totale (S) du ou des orifices (52) d'éjection augmentée d'une section correspondant à une marge et aux pertes de charge présentes dans la conduite (56) entre ladite restriction (62) et le ou les orifices (52), la position relative des moyens (58) de mesure de la pression et la réduction de section (62) permettant d'engendrer en cas d'apparition d'une fuite une variation de la pression significative et détectable par rapport à une pression normale de fonctionnement.

2. Dispositif de dégivrage selon l'une quelconque des revendications précédentes, **caractérisé en ce que** ladite restriction (62) a des formes adaptées pour limiter les perturbations et les pertes de charge.

3. Dispositif de dégivrage selon la revendication 2, **caractérisé en ce que** ladite restriction (62) a une forme de convergent puis de divergent.

4. Dispositif de dégivrage selon l'une quelconque des revendications précédentes, **caractérisé en ce que** ladite restriction (62) est disposée entre les moyens (58) de mesure et des moyens (60) de régulation.

5. Dispositif de dégivrage selon la revendication 4, **caractérisé en ce que** ladite restriction (62) est disposée à une distance (L) supérieure ou égale à 5xD par rapport aux moyens (60) de régulation, D étant le diamètre de la conduite (56).

6. Dispositif de dégivrage selon la revendication 4 ou 5, **caractérisé en ce que** ladite restriction (62) est disposée la plus proche possible des moyens (58) de mesure.

7. Nacelle d'aéronef comportant un dispositif de dégivrage selon l'une quelconque des revendications précédentes.

## Patentansprüche

1. Enteisungsvorrichtung einer Anströmkante, wobei die Vorrichtung wenigstens eine Öffnung (52) für den Ausstoß von warmer Luft, eine Leitung (56) um die warme Luft von einer Motorisierung zur Öffnung (52) für den Ausstoß zu führen, und Mittel (58) zur Messung des Drucks im Inneren der Leitung (56) aufweist, wobei die Leitung (56) wenigstens eine Querschnittsverringerung aufweist, die als Verengung (62) bezeichnet wird und die sich in Strömungsrichtung vor den Mitteln (58) zum Messen des Drucks befindet, und wobei die Verengung (62) einen Querschnitt S' aufweist, der gleich dem gesamten Querschnitt (S) des oder der Öffnung(en) (52) für den Ausstoß ist, und der um einen Querschnitt vergrößert ist, der einem Schwankungsbereich und den Druckverlusten entspricht, die in der Leitung (56) zwischen der Verengung (62) und der oder den Öffnung(en) (52) auftreten, wobei die relative Lage der Mittel (58) zum Messen des Drucks und der Querschnittsverringerung (62) im Falle des Auftretens eines Lecks gestattet, eine signifikante und erfassbare Druckänderung in Bezug auf den normalen Betriebsdruck zu erzeugen.

2. Enteisungsvorrichtung nach einem der vorhergehenden Ansprüche, **dadurch gekennzeichnet, dass** die Verengung (62) eine Form aufweist, die dazu eingerichtet ist, Störungen und Druckverluste zu begrenzen.

3. Enteisungsvorrichtung nach Anspruch 2, **dadurch gekennzeichnet, dass** die Verengung (62) eine konvergente und dann divergente Form aufweist.

4. Enteisungsvorrichtung nach einem der vorhergehenden Ansprüche, **dadurch gekennzeichnet, dass** die Verengung (62) zwischen den Mitteln (58) zum Messen und Mitteln (60) für die Steuerung angeordnet ist.

5. Enteisungsvorrichtung nach Anspruch 4, **dadurch gekennzeichnet, dass** die Verengung (62) in einer Entfernung (L) angeordnet ist, die größer oder gleich 5xD in Bezug auf die Mittel (60) für die Steuerung ist, wobei D der Durchmesser der Leitung (56) ist.

6. Enteisungsvorrichtung nach Anspruch 4 oder 5, **dadurch gekennzeichnet, dass** die Verengung (62) so nah wie möglich an den Mitteln (58) zum Messen angeordnet ist.

7. Gondel eines Luftfahrzeugs mit einer Enteisungsvorrichtung nach einem der vorhergehenden Ansprüche.

## Claims

1. Device for defrosting a leading edge of an aircraft, whereby said device comprises at least one opening (52) for ejecting hot air, a pipe (56) for directing the hot air from a power plant to said ejection opening (52), and means (58) for measuring the pressure inside said pipe (56), said pipe (56) comprising at least one cross-section reduction called a chokepoint (62) upstream from the means (58) for measuring pressure, the chokepoint (62) has a cross-section S' that is equal to the total cross-section (S) of the ejection opening(s) (52) increased by a cross-section that corresponds to a margin and to pressure drops that are present in the pipe (56) between said chokepoint (62) and the opening(s) (52), the relative position of means (58) for measuring the pressure and the cross-section reduction (62) permitting to obtain in the case of leak a significant and detectable variation of pressure compared to a normal operating pressure.

2. Defrosting device according the preceding claim, wherein said chokepoint (62) has suitable shapes for limiting the disruptions and the pressure drops.

3. Defrosting device according to Claim 2, wherein said chokepoint (62) has a convergent shape and then a divergent shape.

4. Defrosting device according to any of the preceding claims, wherein said chokepoint (62) is arranged between the measuring means (58) and the regulating means (60).

5. Defrosting device according to Claim 4, wherein said chokepoint (62) is arranged at a distance (L) that is greater than or equal to 5 x D relative to the regulating means (60), whereby D is the diameter of the pipe (56).

6. Defrosting device according to Claim 4 or 5, wherein said chokepoint (62) is arranged as close as possible to measuring means (58).

7. Aircraft nacelle that comprises a defrosting device according to any of the preceding claims.
